# EUROPEAN PATENT SPECIFICATION

(11) **EP 3 960 935 B1**
(45) Date of publication and mention of the grant of the patent: **26.07.2023**
(21) Application number: 21193563.0
(22) Date of filing: 27.08.2021
(51) Int. Cl.: E02F 9/08, B60R 21/13, B62D 21/18, B66C 23/78, B66F 11/04, E02F 9/20, E02F 9/22, B62D 37/04, B62D 49/08

(54) **CONSTRUCTION MACHINERY WITH OUTRIGGER CONTROL SYSTEM**
BAUMASCHINE MIT STEUERUNGSVORRICHTUNG FÜR STABILISIERUNGSELEMENTE
ENGIN DE CONSTRUCTION AVEC SYSTEM DE CONTRÔLE DE PIEDS STABILISATEURS

(30) Priority: 28.08.2020 KR 20200108964
(43) Date of publication of application: 02.03.2022
(73) Proprietor: Hyundai Doosan Infracore Co., Ltd., Incheon (KR)
(72) Inventor: LEE, Sookwang, 07703 Seoul (KR)
(74) Representative: Isarpatent

(56) References cited:
- EP-A1- 2 910 691
- JP-A- 2004 359 421
- JP-A- 2008 280 097
- JP-A- 2018 043 577
- JP-A- 2019 073 370
- US-A- 3 604 866
- US-A1- 2016 097 238

## Description

### FIELD OF THE DISCLOSURE

The present disclosure relates to a construction machine, and particularly, to a construction machine which is capable of improving the convenience of manipulation related to horizontal control of a vehicle.

### BACKGROUND OF THE DISCLOSURE

In general, an outrigger is mounted on a body of a wheel-type excavator in order to improve safety of the body when the wheel-type excavator lifts or supports a heavy object.

The outrigger is installed on each of both sides of the vehicle body, so that when the excavator operates while being inclined to one side, the outrigger serves to stably maintain the excavator horizontally with respect to the ground.

The outrigger has a structure in which the outrigger is extended and used only when necessary, and when the outrigger is not used, such as while driving, the outrigger is inserted into the vehicle body so as not to interfere with the driving.

### [Prior Art Literature]

### [Patent Document]

Korean Patent Application Publication No. 10-2009-0071205 (published on July 1, 2009) JP 2008280097 relates to an outrigger overhanging state adjusting device. This document forms the basis for the preamble of the independent claim.

JP 2004359421 relates to a hydraulic device for a crawler crane.

JP 2019073370 relates to an outrigger device.

JP 2018 043577 A relates to an outrigger jack movement control device.

US 3 604 866 A relates to a toggle operating type rotor actuating means for use in a rotary switch.

### SUMMARY

An object of the present disclosure is to provide a construction machine which is capable of improving the convenience of manipulation related to horizontal control of a vehicle machine.

According to the invention there is provided a construction machine as defined in the independent claim. Preferred embodiments are defined in the dependent claims.

When the manipulation lever is manipulated in the state where the mode of the mode control switch is switched to a third operation mode, the height of the plurality of outriggers is simultaneously controlled.

The mode of the mode control switch is switched by a four-step toggle method.

When the mode control switch is pressed once, the mode of the mode control switch is switched to any one of an off mode, a first operation mode, a second operation mode, and a third operation mode.

In the construction machine according to the present disclosure, the height of the plurality of outriggers is automatically adjusted based on an inclination of the construction machine by a manipulation of the mode control switch, thereby improving manipulation convenience in relation to the horizontal control of the construction machine.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a lateral view of a construction machine according to an embodiment of the present disclosure.
FIG. 2 is a top view of the construction machine of FIG. 1.
FIG. 3 is a detailed diagram of any one outrigger of FIG. 2.
FIG. 4 is a diagram illustrating a manipulation unit disposed in an operating room of the construction machine of FIG. 1.
FIG. 5 is a diagram for describing an operation of the construction machine in the state where a mode of a mode control switch is switched to an inclined mode.
FIG. 6 is a diagram for describing an operation of the construction machine in the state where a mode of the mode control switch is switched to a horizontal mode.
FIGS. 7 and 8 are diagrams for describing an operation of the construction machine according to the present disclosure.

### DETAILED DESCRIPTION

In the following detailed description, reference is made to the accompanying drawing, which forms a part hereof. The illustrative embodiments described in the detailed description, drawing, and claims are not meant to be limiting. Other embodiments may be utilized, and other changes may be made, without departing from the spirit or scope of the subject matter presented here.

The advantages and characteristics of the present disclosure, and a method for achieving the advantages and characteristics will become clear by referring to the embodiment, which is described below in detail, together with the accompanying drawings. However, the present disclosure is not limited to embodiments disclosed herein but will be implemented in various forms, and the embodiments are provided so that the present disclosure is completely disclosed, and a person of ordinary skilled in the art can fully understand the scope of the present disclosure, and the present disclosure will be defined only by the scope of the appended claims. Accordingly, in several embodiments, well-known process steps, well-known element structures, and well-known technologies are not described in detail in order to avoid obscuring the present disclosure. Throughout the specification, the same reference numeral indicates the same constituent element.

In the drawings, the thickness of layers and regions are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present. It will be understood that when an element such as a layer, film, region, or substrate is referred to as being "under" another element, it can be directly under the other element or intervening elements may also be present. In contrast, when an element is referred to as being "directly under" another element, there are no intervening elements present.

The spatially relative terms, "below", "beneath", "lower", "above", "upper", and the like may be used for easily describing the correlation of one device or constituent elements with other devices or constituent elements as illustrated in the drawings. The spatially relative terms should be understood as the terms including different directions of the elements when the elements are used or operated in addition to the direction illustrated in the drawing. For example, when an element illustrated in the drawing is turned over, the element described as being "below" or "beneath" the other element may be placed "above" the other element. Accordingly, the illustrative term "below" or "beneath" may include both the directions below and above. The element may also be oriented in different directions, and in this case, the spatially relative terms may be interpreted according to the orientation.

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising", will be understood to imply the inclusion of stated elements but not the exclusion of any other elements.

In the present specification, terms, such as a first, a second, and a third, may be used for describing various constituent elements, but the constituent elements are not limited by the terms. The terms are used for discriminating one constituent element from other constituent elements. For example, without departing from the scope of the present disclosure, a first constituent element may be named as a second or third constituent element, and similarly, a second constituent element and a third constituent element may be alternately named.

Unless otherwise defined, all of the terms (including technical and scientific terms) used in the present specification may be used as a meaning commonly understandable by those skilled in the art. Further, terms defined in a generally used dictionary shall not be construed as being ideal or excessive in meaning unless they are clearly defined.

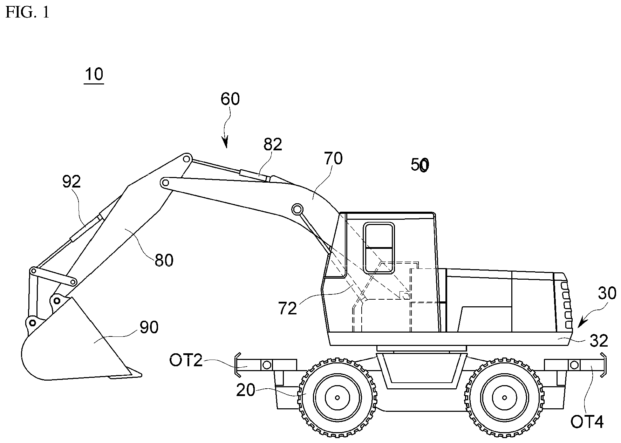

Hereinafter, a construction machine according to the present disclosure will be described in detail with reference to FIGS. 1 to 8.

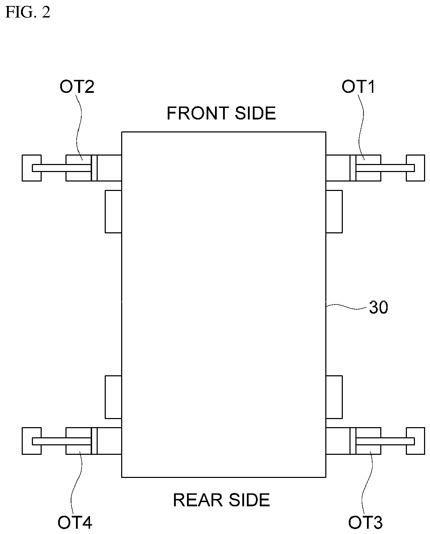

FIG. 1 is a lateral view of a construction machine according to an embodiment of the present disclosure, and FIG. 2 is a top view of the construction machine of FIG. 1.

A construction machine 10 according to an embodiment of the present disclosure may include a travelling body 20, a swing body 30 mounted to swing on the travelling body 20, outriggers installed on lateral surfaces of the travelling body, and an operating room 50 and a front working device 60 installed in the swing body 30, as illustrated in FIGS. 1 and 2.

The travelling body 20 may support the swing body 30, and make the construction machine 10, such as an excavator, travel by using power generated in an engine. The travelling body 20 may be a wheel-type travelling body including travelling wheels. Alternatively, the travelling body 20 may be a caterpillar-type travelling body including a caterpillar. The swing body 30 includes an upper frame 32 as a base and may rotate on a plane parallel to the ground G on the travelling body 20 and set a working direction. The operating room 50 may be installed at a left-front part of the upper frame 32, and the front working device 60 may be mounted to the front part of the upper frame 32.

The front working device 60 may include a boom 70, an arm 80, and a bucket 90. A boom cylinder 72 for controlling a movement of the boom 70 may be installed between the boom 70 and the upper frame 32. An arm cylinder 82 for controlling a movement of the arm 80 may be installed between the boom 70 and the arm 80. Further, a bucket cylinder 92 for controlling a movement of the bucket 90 may be installed between the arm 80 and the bucket 90. As the boom cylinder 72, the arm cylinder 82, and the bucket cylinder 92 are extended or contracted, the boom 70, the arm 80, and the bucket 90 may implement various movements, and the front working device 60 may perform various work. In this case, the boom cylinder 72, the arm cylinder 82, and the bucket cylinder 92 may be extended or contracted by hydraulic fluid supplied from a hydraulic pump.

An outrigger may be mounted on a body of a wheel-type excavator in order to improve safety of the body when the wheel-type excavator lifts or supports a heavy object. The outrigger is installed on each of both sides of the vehicle body, so that when the excavator operates while being inclined to one side, the outrigger may serve to stably maintain the excavator horizontally with respect to the ground G. Further, the outrigger has a structure in which the outrigger is extended and used only when necessary, and when the outrigger is not used, such as while driving, the outrigger is inserted into the vehicle body so as not to interfere with the driving.

For example, as illustrated in FIG. 2, the outriggers may include a first outrigger OT1 disposed at a front-left side of the travelling body, a second outrigger OT2 disposed at a front-right side of the travelling body, a third outrigger OT3 disposed at a rear-left side of the travelling body, and a fourth outrigger OT4 disposed at a rear-right side of the travelling body.

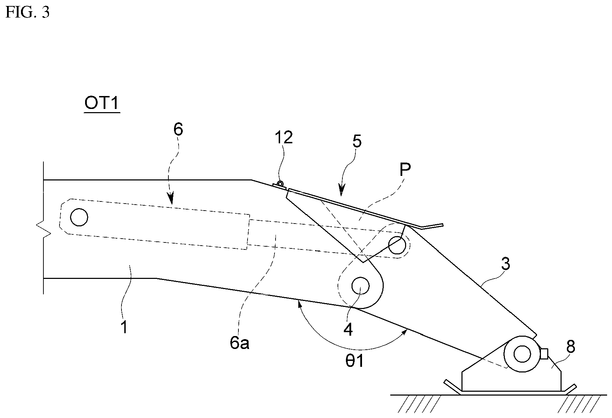

FIG. 3 is a detailed diagram of any one outrigger of FIG. 2.

The outrigger may include a frame 1, a leg member 3, a foot member 8, a cylinder 6, a protection cover 5, and a hinge pin 12 as illustrated in FIG. 3.

The frame 1 may be installed in front or rear of the vehicle body of the construction machine, so that the leg member 3 is rotatably connected to the end of the frame 1 through a pivot pin 4.

The foot member 8 is rotatably connected to the end of the leg member 3. The foot member is in contact with the ground G to support weight of the vehicle body.

The cylinder 6 is connected between the frame 1 and the leg member 3, and according to the extending or contracting operation of the cylinder 6, the leg member 3 may rotate toward the ground G or above the ground G with respect to the pivot pin 4. In particular, the leg member 3 may rotate with respect to the pivot pin 4 according to the extension or contraction of a piston rod 6a of the cylinder 6.

As described above, the leg member 3 rotates with respect to the pivot pin according to the operation of the cylinder 6, and an angle between the leg member 3 and the frame is determined according to the location of the leg member 3. As the angle between the leg member 3 and the frame 1 is small, a height from the ground G to the frame increases, and on the contrary, as the angle between the leg member 3 and the frame 1 is large, a height from the ground G to the frame decreases.

The protection cover 5 covers a gap between the frame 1 and the leg member 3 in order to prevent the piston rod 6a from being damaged from intrusion of foreign substances. As illustrated in FIG. 3, one end of the protection cover 5 is hinged to an end of the frame 1 through a hinge pin 12 and rises together with the leg member 3 when the leg member 3 rises, and when the leg member 3 descends, the protection cover 5 rotates by its own weight to cover a gap between the frame 1 and the leg member 3.

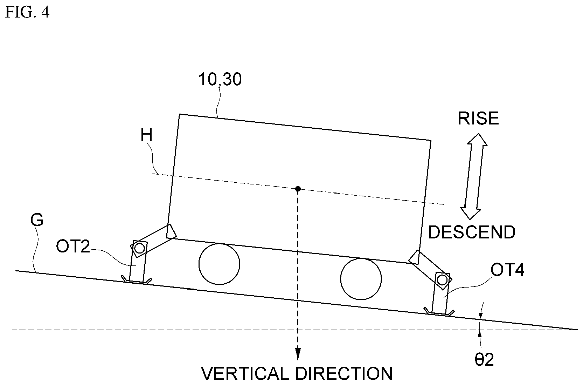

FIG. 4 is a diagram illustrating the manipulation unit 300 disposed in the operating room of the construction machine of FIG. 1.

The manipulation unit 300 may include various switches as illustrated in FIG. 4.

For example, the manipulation unit 300 may include a first outrigger control switch SW1, a second outrigger control switch SW2, a third outrigger control switch SW3, a fourth outrigger control switch SW4, and a mode control switch.

When the first outrigger control switch SW1 is on, the first outrigger OT1 may be activated, when the second outrigger control switch SW2 is on, the second outrigger OT2 may be activated, when the third outrigger control switch SW3 is on, the third outrigger OT3 may be activated, and when the fourth outrigger control switch SW4 is on, the fourth outrigger OT4 may be activated. Herein, the plurality of outrigger control switches may be maintained in the on-state together. In this case, the plurality of outriggers may be maintained in the activated state together.

The activated outrigger may be manipulated through a manipulation lever. For example, in the state where the first outrigger OT1 and the second outrigger OT2 are activated, when a user pushes the manipulation lever in a predetermined direction, the heights of the first and second outriggers OT1 and OT2 may be decreased. However, in the state where the first outrigger OT1 and the second outrigger OT2 are activated, when a user pulls the manipulation lever in a predetermined direction, the heights of the first and second outriggers OT1 and OT2 may be increased.

As illustrated in FIG. 4, the mode control switch may operate in a four-step toggle method. That is, the mode of the mode control switch may be switched by the four-step toggle method. For example, when the mode control switch is pressed once, the mode control switch may be switched to any one of an off mode, a free operation mode, an inclined operation mode, and a horizontal operation mode. Here, as one example, when the mode control switch in the off mode state is pressed once (G), the off mode of the mode control switch may be switched to the free operation mode that is the next mode, when the mode control switch in the free operation mode state is pressed once (G), the free operation mode of the mode control switch may be switched to the inclined operation mode that is the next mode, when the mode control switch in the inclined operation mode state is pressed once (G), the inclined operation mode of the mode control switch may be switched to the horizontal operation mode that is the next mode, and when the mode control switch in the horizontal operation mode state is pressed once (G), the horizontal operation mode of the mode control switch may be switched to the off mode that is the next mode.

In the meantime, the mode control switch may include a first display unit 501, a second display unit 502, and a third display unit 503 for indicating the current operation mode. The second display unit 502 may be disposed between the first display unit 501 and the third display unit 503. Each of the first to third display units 501, 502, 503 may include a Light Emitting Diode (LED).

When a mode of the mode control switch is switched to the free operation mode, the first display unit 501 is turned on and the second and third display units 502 and 503 are turned off.

When the mode of the mode control switch is switched to the inclined operation mode, the second display unit 502 is turned on and the first and third display units 501 and 503 are turned off.

When the mode of the mode control switch is switched to the horizontal operation mode, the third display unit 503 is turned on and the first and second display units 501 and 502 are turned off.

In the meantime, when the mode of the mode control switch is switched to the off mode, all of the first to third display units 501, 502, and 503 are turned off.

In the state where the mode of the mode control switch is switched to the off mode, all of the first to fourth outriggers OT1 to OT4 are inactivated. When the first to fourth outriggers OT1 to OT4 are inactivated, even though the manipulation lever is manipulated, the first to fourth outriggers OT1 to OT4 are not operated.

In the state where the mode of the mode control switch is switched to the free operation mode, all of the first to fourth outriggers OT1 to OT4 are activated. When the first to fourth outriggers OT1 to OT4 are activated, the first to fourth outriggers OT1 to OT4 may be controlled by the manipulation of the manipulation lever. For example, in the state where the mode of the mode control switch is switched to the free operation mode, when a driver pushes the manipulation lever in a predetermined direction, all of the heights of the first to fourth outriggers OT1 to OT4 are decreased. In this case, the heights of the first to fourth outriggers OT1 to OT4 are all controlled with the same displacement amount. On the contrary, in the state where the mode of the mode control switch is switched to the free operation mode, when a driver pulls the manipulation lever in a predetermined direction, all of the heights of the first to fourth outriggers OT1 to OT4 are increased. In this case, the heights of the first to fourth outriggers OT1 to OT4 are all controlled with the same displacement amount.

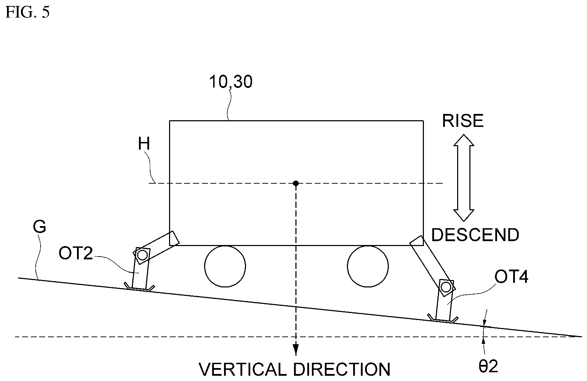

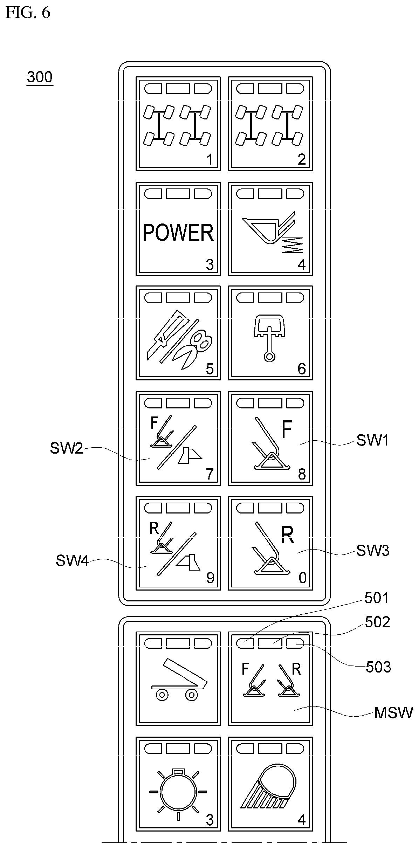

In the meantime, the operations of the first to fourth outriggers OT1 to OT4 when the mode of the mode control switch is switched to the inclined operation mode or the horizontal operation mode will be described below with reference to FIGS. 5 and 6 in detail.

FIG. 5 is a diagram for describing an operation of the construction machine in the state where a mode of the mode control switch is switched to the inclined mode, and FIG. 6 is a diagram for describing an operation of the construction machine in the state where a mode of the mode control switch is switched to the horizontal mode.

As illustrated in FIG. 5, when the ground G is an inclined surface inclined at a predetermined angle, and the construction machine 10 is disposed on the ground G, a horizontal surface H of the vehicle 30 of the construction machine 10 may substantially have the same inclination as that of the ground G. Herein, the horizontal surface H of the vehicle may mean, for example, a virtual surface connecting a front side and a rear side of the swing body 30 of the construction machine 10. The front side and the rear side of the swing body 30 are located at the same height from the ground G when the construction machine 10 is disposed on the ground G.

When the construction machine 10 is disposed on the inclined ground G and the manipulation lever is manipulated in the state where the mode of the mode control switch is switched to the inclined operation mode as illustrated in FIG. 5, the heights of the first to fourth outriggers OT1 to OT4 may be individually controlled so that the horizontal surface H of the vehicle is parallel to the ground G.

For example, when the user pulls the manipulation lever in a predetermined direction in the state where the mode of the mode control switch is switched to the inclined operation mode, the heights of the first to fourth outriggers OT1 to OT4 are increased in the state where the inclination of the horizontal surface H of the vehicle is maintained at θ2. That is, the construction machine 10 may rise so as to be away from the ground G in the state where the inclination of the horizontal surface H is maintained. On the contrary, when the user pushes the manipulation lever in a predetermined direction in the state where the mode of the mode control switch is switched to the inclined operation mode, the heights of the first to fourth outriggers OT1 to OT4 are decreased in the state where the inclination of the horizontal surface H of the vehicle is maintained at θ2. That is, the construction machine 10 may descend toward the ground G in the state where the inclination θ2 of the horizontal surface H is maintained.

As described above, when the manipulation lever is manipulated in the state where the mode of the mode control switch is switched to the inclined operation mode, the heights of the first to fourth outriggers OT1 to OT4 may be individually controlled so that the height of the construction machine 10 is adjusted in the state where the inclination of the construction machine 10 is identically maintained to the inclination θ2 of the ground G.

In the meantime, when the construction machine 10 is disposed on the inclined ground G and the manipulation lever is manipulated in the state where the mode of the mode control switch is switched to the horizontal operation mode as illustrated in FIG. 6, the heights of the first to fourth outriggers OT1 to OT4 may be individually controlled so that the horizontal surface H of the vehicle is perpendicular to the vertical direction.

For example, when the user pulls the manipulation lever in a predetermined direction in the state where the mode of the mode control switch is switched to the horizontal operation mode, the construction machine 10 may rise so as to be away from the ground G in the state where the horizontal surface H of the vehicle is maintained to be vertical to the vertical direction. On the other hand, when the user pushes the manipulation lever in a predetermined direction in the state where the mode of the mode control switch is switched to the horizontal operation mode, the construction machine 10 may descend toward the ground G in the state where the horizontal surface H of the vehicle is maintained to be perpendicular to the vertical direction.

As described above, when the manipulation lever is manipulated in the state where the mode of the mode control switch is switched to the horizontal operation mode, the heights of the first to fourth outriggers OT1 to OT4 may be individually controlled so that the height of the construction machine 10 is adjusted in the state where the inclination of the construction machine 10 is substantially maintained at 0 degree, regardless of the inclination θ2 of the ground G.

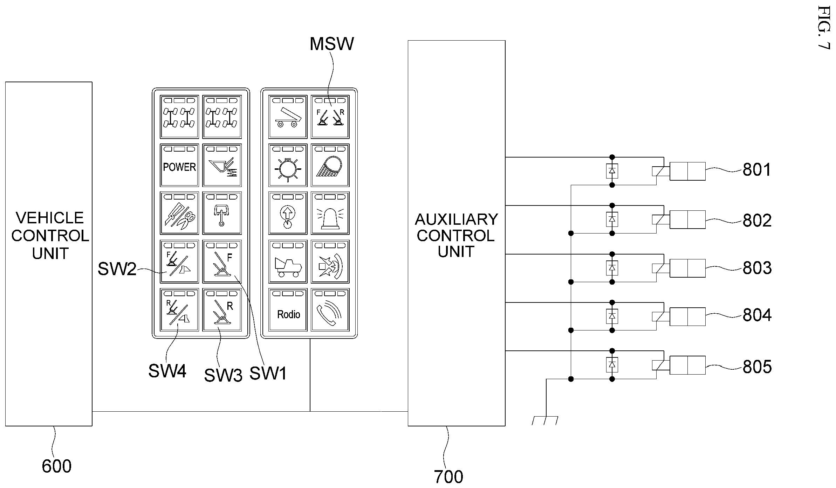

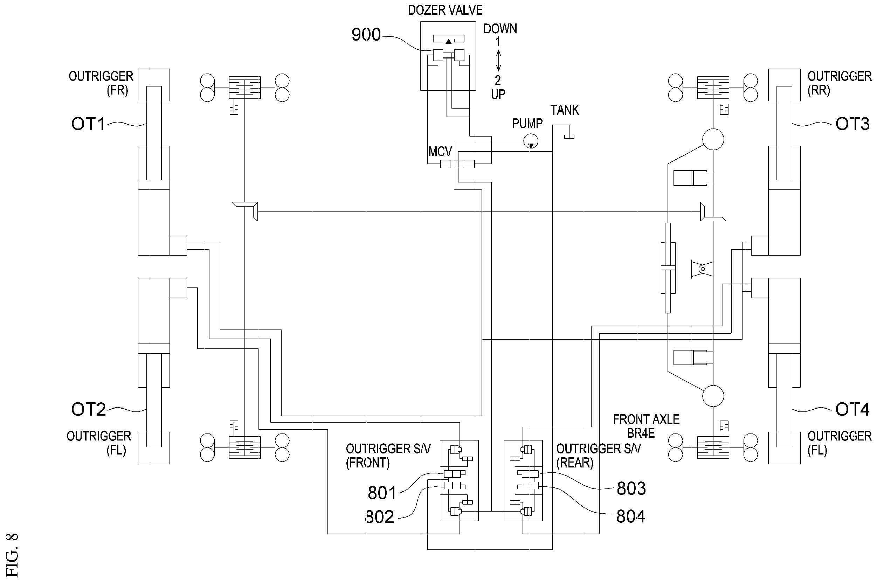

FIGS. 7 and 8 are diagrams for describing an operation of the construction machine according to the present disclosure.

The construction machine may include a vehicle control unit 600, an auxiliary control unit 700, a first solenoid valve 801, a second solenoid valve 802, a third solenoid valve 803, and a fourth solenoid valve 804 as illustrated in FIGS. 7 and 8.

The vehicle control unit 600 includes an angle sensor, and may calculate an inclination of the horizontal surface H of the vehicle. The vehicle control unit 600 calculates the inclination of the horizontal surface H of the vehicle, and transmits information on the calculated inclination to the auxiliary control unit 700.

The auxiliary control unit 700 controls the first to fourth solenoid valves 801 to 804 based on a manipulation signal of the manipulation unit 300 and the information on the inclination from the vehicle control unit 600. Herein, the manipulation signal may include, for example, the manipulation signals from the first outrigger control switch SW1, the second outrigger control switch SW2, the third outrigger control switch SW3, the fourth outrigger control switch SW4, the mode control switch, and the manipulation lever 900.

The first to fourth solenoid valves 801 to 804 control pressure of hydraulic fluid supplied to the first to fourth outriggers OT1 to OT4. For example, the first solenoid valve 801 controls pressure of the hydraulic fluid supplied to the cylinder 6 of the first outrigger OT1, the second solenoid valve 802 controls pressure of the hydraulic fluid supplied to the cylinder of the second outrigger OT2, the third solenoid valve 803 controls pressure of the hydraulic fluid supplied to the cylinder of the third outrigger OT3, and the fourth solenoid valve 804 controls pressure of the hydraulic fluid supplied to the cylinder of the fourth outrigger OT4. The length of the piston rod 6a of the cylinder provided in each of the outriggers OT1 to OT4 may be controlled according to the pressure of the hydraulic fluid, and the height of each of the outriggers OT1 to OT4 may be controlled according to the length of the piston rod 6a.

For example, when the mode of the mode control switch is switched to the inclined operation mode and it is determined that the manipulation lever is manipulated in the pulling direction, the auxiliary control unit 700 may control the heights of the first to fourth outriggers OT1 to OT4 so that the height of the construction machine 10 is increased in the state where the inclination of the vehicle is identically maintained to the inclination (for example, θ2) of the ground G by controlling the first to fourth solenoid valves 801 to 804 based on the information on the inclination from the vehicle control unit 600.

For another example, when the mode of the mode control switch is switched to the horizontal operation mode and it is determined that the manipulation lever is manipulated in the pushing direction, the auxiliary control unit 700 may control the heights of the first to fourth outriggers OT1 to OT4 so that the height of the construction machine 10 is decreased in the state where the inclination of the vehicle is substantially maintained at 0 degree by controlling the first to fourth solenoid valves 801 to 804 based on the information on the inclination (that is, 0 degree) from the vehicle control unit 600.

In the meantime, the auxiliary control unit 700 may further control an operation of a fifth solenoid valve 805 for controlling a trailer dump.

The present disclosure described above is not limited to the foregoing embodiment and the accompanying drawings, and it will be apparent to those skilled in the art that various substitutions, modifications, and changes can be made without departing from the scope of the appended claims.

## Claims

1. A construction machine (10), comprising:
a travelling body (20);
a plurality of outriggers (OT1, OT2, OT3, OT4) disposed in the travelling body (20);
a manipulation lever for controlling a height of the plurality of outrigger (OT1, OT2, OT3, OT4); and
a mode control switch for controlling an operation mode of the plurality of outriggers (OT1, OT2, OT3, OT4);
wherein when the ground (G) is an inclined surface inclined at a predetermined angle, when the manipulation lever is manipulated in the state where a mode of the mode control switch is switched to a horizontal operation mode, the height of the plurality of outriggers (OT1, OT2, OT3, OT4) is individually controlled so that a horizontal line of the travelling body (20) is perpendicular to a vertical direction; **characterised in that** when the manipulation lever is manipulated in the state where the mode of the mode control switch is switched to an inclined operation mode, the height of the plurality of outriggers (OT1, OT2, OT3, OT4) is individually controlled so that a horizontal line of the travelling body (20) is parallel to the ground (G).

2. The construction machine (10) of claim 1, further comprising:
a plurality of solenoid valves (801, 802, 803, 804) configured to move the plurality of outriggers (OT1, OT2, OT3, OT4); and
a control unit configured to control the plurality of solenoid valves (801, 802, 803, 804).

3. The construction machine (10) of claim 2, wherein the control unit (600) includes:
a vehicle control unit (600) including an angle sensor which is configured to calculate an angle with a horizontal surface on which the construction machine (20) is located; and
an auxiliary control unit (700) configured to control the plurality of solenoid valves (801, 802, 803, 804) based on the calculated angle.

4. The construction machine (10) of claim 3, wherein the auxiliary control unit (700) is configured to adjust the length and the height of the plurality of moving outriggers (OT1, OT2, OT3, OT4) by controlling the solenoid valves (801, 802, 803, 804), respectively, based on the angle.

5. The construction machine (10) of claim 1, wherein when the manipulation lever is manipulated in the state where the mode of the mode control switch is switched to a third operation mode, the height of the plurality of outriggers (OT1, OT2, OT3, OT4) is simultaneously controlled.

6. The construction machine (10) of claim 1, wherein the mode of the mode control switch is switched by a four-step toggle method.

7. The construction machine (10) of claim 6, wherein when the mode control switch is pressed once, the mode control switch is switched to any one of an off mode, a horizontal operation mode, an inclined operation mode, and a third operation mode.

## Patentansprüche

1. Baumaschine (10), umfassend:
ein Fahrgestell (20);
eine Vielzahl von Auslegern (OT1, OT2, OT3, OT4), die in dem Fahrgestell (20) angeordnet sind;
einen Betätigungshebel zum Steuern der Höhe der Vielzahl von Auslegern (OT1, OT2, OT3, OT4); und
einen Betriebsartsteuerungsschalter zum Steuern einer Betriebsart der Vielzahl von Auslegern (OT1, OT2, OT3, OT4);
wobei, wenn der Boden (G) eine geneigte Fläche ist, die in einem vorbestimmten Winkel geneigt ist, wenn der Betätigungshebel in dem Zustand betätigt wird, in dem eine Betriebsart des Betriebsartsteuerungsschalters auf eine horizontale Betriebsart umgeschaltet ist, die Höhe der Vielzahl von Auslegern (OT1, OT2, OT3, OT4) einzeln so gesteuert wird, dass eine horizontale Linie des Fahrgestells (20) rechtwinklig zu einer vertikalen Richtung verläuft; **dadurch gekennzeichnet, dass**
wenn der Betätigungshebel in dem Zustand betätigt wird, in dem die Betriebsart des Betriebsartsteuerungsschalters auf eine geneigte Betriebsart umgeschaltet ist, die Höhe der Vielzahl von Auslegern (OT1, OT2, OT3, OT4) einzeln so gesteuert wird, dass eine horizontale Linie des Fahrgestells (20) parallel zum Boden (G) verläuft.

2. Baumaschine (10) gemäß Anspruch 1, ferner umfassend:
eine Vielzahl von Magnetventilen (801, 802, 803, 804), die dazu ausgelegt sind,die Vielzahl von Auslegern (OT1, OT2, OT3, OT4) zu bewegen; und
eine Steuereinheit, die zum Steuern der Vielzahl von Magnetventilen (801, 802, 803, 804) ausgelegt ist.

3. Baumaschine (10) gemäß Anspruch 2, wobei die Steuereinheit (600) umfasst:
eine Fahrzeugsteuereinheit (600) mit einem Winkelsensor, der dazu ausgelegt ist, einen Winkel mit einer horizontalen Fläche, auf der sich die Baumaschine (20) befindet, zu berechnen; und
eine Hilfssteuereinheit (700), die dazu ausgelegt ist, die Vielzahl von Magnetventilen (801, 802, 803, 804) basierend auf dem berechneten Winkel zu steuern.

4. Baumaschine (10) gemäß Anspruch 3, wobei die Hilfssteuereinheit (700) dazu ausgelegt ist, die Länge und die Höhe der Vielzahl von beweglichen Auslegern (OT1, OT2, OT3, OT4) durch Steuern der Magnetventile (801, 802, 803, 804) jeweils basierend auf dem Winkel einzustellen.

5. Baumaschine (10) gemäß Anspruch 1, wobei, wenn der Betätigungshebel in dem Zustand betätigt wird, in dem die Betriebsart des Betriebsartsteuerungsschalters auf eine dritte Betriebsart umgeschaltet ist, die Höhe der Vielzahl von Auslegern (OT1, OT2, OT3, OT4) gleichzeitig gesteuert wird.

6. Baumaschine (10) gemäß Anspruch 1, wobei die Betriebsart des Betriebsartsteuerungsschalters durch ein vierstufiges Kippverfahren umgeschaltet wird.

7. Baumaschine (10) gemäß Anspruch 6, wobei bei einmaligem Drücken des Betriebsartsteuerungsschalters der Betriebsartsteuerungsschalter in eine von einer ausgeschalteten Betriebsart, einer horizontalen Betriebsart, einer geneigten Betriebsart und einer dritten Betriebsart umgeschaltet wird.

## Revendications

1. Engin de construction (10), comprenant :
un corps roulant (20) ;
une pluralité de stabilisateurs (OT1, OT2, OT3, OT4) disposés dans le corps roulant (20) ;
un levier de manipulation pour commander une hauteur de la pluralité de stabilisateurs (OT1, OT2, OT3, OT4) ; et
un commutateur de commande de mode pour commander un mode de fonctionnement de la pluralité de stabilisateurs (OT1, OT2, OT3, OT4) ;
dans lequel, lorsque le sol (G) est une surface inclinée, inclinée à un angle prédéterminé, lorsque le levier de manipulation est manipulé dans l'état où un mode du commutateur de commande de mode est commuté à un mode de fonctionnement horizontal, la hauteur de la pluralité de stabilisateurs (OT1, OT2, OT3, OT4) est individuellement commandée pour qu'une ligne horizontale du corps roulant (20) soit perpendiculaire à une direction verticale, **caractérisé en ce que** lorsque le levier de manipulation est manipulé dans l'état où le mode du commutateur de commande de mode est commuté à un mode de fonctionnement incliné, la hauteur de la pluralité de stabilisateurs (OT1, OT2, OT3, OT4) est individuellement commandée pour qu'une ligne horizontale du corps roulant (20) soit parallèle au sol (G).

2. Engin de construction (10) selon la revendication 1, comprenant en outre :
une pluralité de soupapes à solénoïde (801, 802, 803, 804) configurées pour mouvoir la pluralité de stabilisateurs (OT1, OT2, OT3, OT4) ; et
une unité de commande configurée pour commander la pluralité de soupapes à solénoïde (801, 802, 803, 804).

3. Engin de construction (10) selon la revendication 2, dans lequel l'unité de commande (600) inclut :
une unité de commande de véhicule (600) incluant un capteur d'angle qui est configuré pour calculer un angle avec une surface horizontale sur laquelle l'engin de construction (20) est situé ; et
une unité de commande auxiliaire (700) configurée pour commander la pluralité de soupapes à solénoïde (801, 802, 803, 804) sur la base de l'angle calculé.

4. Engin de construction (10) selon la revendication 3, dans lequel l'unité de commande auxiliaire (700) est configurée pour ajuster la longueur et la hauteur de la pluralité de stabilisateurs mobiles (OT1, OT2, OT3, OT4) en commandant les soupapes à solénoïde (801, 802, 803, 804), respectivement, sur la base de l'angle.

5. Engin de construction (10) selon la revendication 1, dans lequel, lorsque le levier de manipulation est manipulé dans l'état où le mode du commutateur de commande de mode est commuté à un troisième mode de fonctionnement, la hauteur de la pluralité de stabilisateurs (OT1, OT2, OT3, OT4) est simultanément commandée.

6. Engin de construction (10) selon la revendication 1, dans lequel le mode du commutateur de commande de mode est commuté par un procédé à bascule à quatre stades.

7. Engin de construction (10) selon la revendication 6, dans lequel lorsque l'on appuie sur le commutateur de commande de mode une fois, le commutateur de commande de mode est commuté à l'un quelconque d'un mode éteint, d'un mode de fonctionnement horizontal, d'un mode de fonctionnement incliné, et d'un troisième mode de fonctionnement.
